Europäisches Patentamt

(19) European Patent Office

Office européen des brevets

(11) Numéro de publication : **0 081 180**
**B1**

(12) **FASCICULE DE BREVET EUROPÉEN**

(45) Date de publication du fascicule du brevet :
**30.10.85**

(51) Int. Cl.⁴ : **B 23 B   3/26**

(21) Numéro de dépôt : **82111030.1**

(22) Date de dépôt : **30.11.82**

(54) **Machine pour usiner une saignée autour d'un embout de tubulure, notamment lors de l'implantation de cet embout sur une cuve de réacteur nucléaire.**

(30) Priorité : **07.12.81 FR 8122870**

(43) Date de publication de la demande :
**15.06.83 Bulletin 83/24**

(45) Mention de la délivrance du brevet :
**30.10.85 Bulletin 85/44**

(84) Etats contractants désignés :
**BE DE GB IT SE**

(56) Documents cités :
**FR-A- 2 211 313**
**FR-A- 2 423 298**
**GB-A- 1 508 544**
**US-A- 1 625 800**
**US-A- 2 211 134**
**US-A- 2 451 729**
**US-A- 3 916 519**

(73) Titulaire : **SKF COMPAGNIE D'APPLICATIONS MECA-NIQUES & CIE faisant commerce sous le nom de COMPAGNIE DES ACIERS, OUTILLAGES ET EQUIPEMENTS INDUSTRIELS 1, avenue Newton F-92142 Clamart (FR)**

**Framatome**
**Tour Fiat 1 place de la Coupole**
**F-92400 Courbevoie (FR)**

(72) Inventeur : **Jacquot, Alain**
**69 avenue de l'Europe**
**F-37100 Tours (FR)**
Inventeur : **Charpentier, Jacques**
**65 avenue de l'Europe**
**F-37100 Tours (FR)**

(74) Mandataire : **Casalonga, Axel et al**
**BUREAU D.A. CASALONGA OFFICE JOSSE & PETIT**
**Baaderstrasse 12-14**
**D-8000 München 5 (DE)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

## Description

La présente invention concerne une machine transportable permettant d'assurer de façon semi-automatique l'usinage de saignées et de chanfreins à flancs cylindriques ou coniques à la périphérie externe de la base d'un embout de tubulure ou d'un manchon. La machine de l'invention peut être avantageusement utilisée pour l'exécution de chanfreins ou de surfaces cylindriques ou coniques à l'extérieur de l'extrémité de tubes de grand diamètre présentant un alésage sensiblement cylindrique ou conique.

Une application particulièrement intéressante de l'invention consiste dans la reprise des envers de tubulures de cuves de réacteurs nucléaires c'est-à-dire l'élimination par usinage des passes initiales de soudure situées à la base ou au talon d'accostage d'une tubulure fixée par soudure sur la virole d'une cuve de réacteur nucléaire. Pour la fixation par soudure de ces tubulures de grand diamètre ou de brides ou embouts de tubulure à la périphérie de la cuve d'un réacteur nucléaire, on procède tout d'abord à la réalisation d'un cordon de soudure continu entre la tubulure et la cuve du réacteur. Avant de procéder à la soudure définitive, il convient alors d'effectuer l'élimination des passes initiales de soudure et de reconstituer le chanfrein extérieur. Ces opérations doivent se faire sur la pièce maintenue à une température élevée de l'ordre de 200 °C. Il en résulte que ces opérations d'usinage, habituellement réalisées de façon manuelle, nécessitent un travail long et délicat dans des conditions éprouvantes.

On a déjà décrit dans la demande de brevet français 78 11 763, une machine d'usinage permettant la réalisation semi-automatique de saignées à flancs cylindriques ou coniques entre un embout de tubulure et une cuve de grand diamètre du côté intérieur à ladite cuve. Dans ce document, la machine comprend une tête d'usinage rotative qui peut être maintenue en position par rapport à la tubulure au moyen de deux ensembles de patins de blocage qui entrent en contact avec la paroi interne de ladite tubulure.

La présente invention a pour objet de permettre la réalisation des opérations d'usinage précitées sur le côté extérieur de la cuve tout en améliorant le blocage et le maintien en position de la machine par rapport à la tubulure.

La machine d'usinage de saignées à la périphérie externe de la base d'un embout de tubulure ou d'un manchon selon l'invention comprend un fût cylindrique adapté pour pénétrer à l'intérieur d'une portion de l'embout de la tubulure. Le fût cylindrique est muni de patins de blocage et de maintien en position susceptibles de coopérer avec la paroi interne de l'embout de tubulure. La machine comprend également une tête d'usinage munie d'un porte-outils réglable radialement, verticalement et en inclinaison. La tête d'usinage est entraînée en rotation par l'intermédiaire d'une couronne dentée comportant des éléments de roulement et coopérant avec un pignon satellite.

Selon l'invention, le blocage et le maintien en position du fût cylindrique par rapport à l'embout de tubulure sont réalisés par la combinaison de deux moyens. Le premier moyen est constitué par une couronne intermédiaire d'accouplement pouvant être fixée à l'extrémité extérieure du fût cylindrique. La couronne intermédiaire comporte en outre des moyens permettant sa fixation sur la face frontale externe de l'embout de tubulure. Le deuxième moyen est constitué par un ensemble de patins de blocage solidaires de vérins hydrauliques montés dans un même plan radial au voisinage de l'extrémité du fût cylindrique. Dans la présente description les qualificatifs « intérieur » ou « interne », « extérieur » ou « externe » se rapporteront par convention, à la cuve sur laquelle est fixé l'embout de tubulure.

Dans ces conditions, on voit que le blocage et le maintien en position du fût cylindrique, c'est-à-dire de l'ensemble de la machine, sont assurés au voisinage de chacune des extrémités dudit fût cylindrique par l'intermédiaire d'une part de la couronne d'accouplement et d'autre part de l'ensemble des patins de blocage. On obtient ainsi un excellent maintien en position lors des opérations d'usinage.

Les moyens permettant la fixation de la couronne intermédiaire d'accouplement sur la face frontale externe de l'embout de tubulure, comprennent de préférence trois patins de fixation solidaires de la couronne et pouvant être fixés, par exemple par des vis, sur trois taquets solidaires de la face frontale externe de l'embout de tubulure. Ces trois taquets peuvent par exemple être soudés sur ladite face frontale externe.

On notera que l'alésage d'un tel embout de tubulure ou d'un manchon analogue n'est jamais parfaitement circulaire. Par ailleurs, l'axe théorique de l'embout de tubulure et l'axe réel de rotation de la tête d'usinage qui doit être centrée par rapport à la saignée à usiner ne sont pas en général en coïncidence. L'utilisation pour le blocage et le maintien en position du fût cylindrique de la machine, de patins de blocage actionnés par des vérins hydrauliques et comportant de ce fait une course variable permettent d'adapter les moyens de blocage du fût cylindrique de la machine aux éventuels décentrages de façon à obtenir un verrouillage convenable du fût cylindrique sans nécessiter aucun réglage.

La couronne intermédiaire peut être munie de trois patins de centrage réglables venant coopérer par des doigts en saillie avec la paroi interne de l'embout de tubulure. Il est alors possible de faciliter le montage de la couronne et sa fixation en réglant au préalable les trois patins de centrage selon le diamètre de la tubulure à usiner.

Pour éviter toute rayure à l'intérieur de la tubulure lors de l'introduction de la machine, trois tiges de guidage sont de préférence fixées à l'extérieur du fût cylindrique sur toute sa hauteur et viennent coopérer avec des évidements solidaires de l'alésage de la couronne intermédiaire lors de l'introduction du fût cylindrique à l'intérieur de l'embout de tubulure. Ces évidements peuvent par exemple être pratiqués sur les trois patins de fixation de la couronne intermédiaire d'accouplement.

Dans un mode de réalisation avantageux de la machine de l'invention, la tête d'usinage est montée sur un plateau entraîné en rotation par l'intermédiaire de la couronne dentée. Le plateau rotatif est solidaire d'un manchon pénétrant en partie à l'intérieur du fût cylindrique et supporté par rapport à celui-ci par un palier à roulements, par exemple un palier à rouleau conique monté au voisinage de l'extrémité intérieure dudit manchon par rapport à la cuve.

Une paroi de fermeture définit de préférence dans une partie du fût cylindrique, un carter étanche pouvant être rempli de lubrifiant, par exemple d'huile, dans laquelle baignent donc les rouleaux de la couronne dentée supportant la tête d'usinage ainsi que le palier à roulement supportant l'extrémité du manchon rotatif précité. Pour améliorer le refroidissement de ce bain d'huile, le lubrifiant est soumis à un mouvement d'agitation par un ensemble de pales radiales solidaires du manchon rotatif.

Dans le cas où l'usinage se fait à haute température comme il a été dit précédemment, une enveloppe cylindrique de protection thermique est de préférence disposée autour du fût cylindrique, les tiges de guidage précitées étant disposées à l'extérieur de l'enveloppe de protection. L'enveloppe est fixée sur une plaque de fond, l'ensemble définissant un espace interne sensiblement étanche renfermant à la fois le manchon rotatif et une portion du carter d'huile et l'ensemble des vérins hydrauliques de commande des patins de blocage. Une gaine centrale est disposée à l'intérieur du manchon rotatif et débouche à l'extérieur de la paroi de fermeture dudit manchon. Il est ainsi possible d'établir une circulation d'air de refroidissement alimentée par la gaine centrale jusque dans l'espace intérieur défini par l'enveloppe de protection thermique.

Le carter étanche rempli de lubrifiant renfermant le manchon rotatif est de préférence délimité en son centre par la paroi externe de la gaine centrale. De cette manière, un échange thermique s'effectue entre le lubrifiant contenu dans le carter et l'écoulement d'air de refroidissement à l'intérieur de la gaine centrale.

Tous ces moyens permettent donc d'assurer un refroidissement convenable des organes de la machine malgré la température élevée de la pièce à usiner.

Afin d'assurer l'équilibrage de la machine, la tête d'usinage comprend de préférence deux bras porte-outils diamétralement opposés entraînés en rotation autour de l'axe de la machine. L'entraînement en rotation de la tête d'usinage est obtenu comme il a été dit par un pignon monté de façon diamétralement opposée à son moteur électrique d'entraînement. Ces deux organes sont placés sur un axe perpendiculaire à celui des deux bras porte-outils. On obtient ainsi une disposition en croix qui améliore l'équilibrage de la machine.

L'invention sera mieux comprise à l'étude de la description détaillée d'un mode de réalisation particulier faite à titre d'exemple nullement limitatif et illustrée par les dessins annexés, sur lesquels :

la figure 1 est une vue extérieure en élévation montrant l'ensemble de la machine montée en vue d'un usinage sur un embout de tubulure de cuve de réacteur nucléaire ;

la figure 2 est une vue partielle en coupe montrant notamment en détail les moyens de blocage et de maintien en position de la machine sur l'embout de tubulure ;

la figure 3 est une vue en coupe selon III-III de la fig. 2 montrant en particulier la structure de la couronne intermédiaire d'accouplement ;

la figure 4 est une vue en coupe selon IV-IV de la fig. 3 montrant le détail d'un patin de centrage ; et

la figure 5 est une vue en coupe selon V-V de la fig. 3 montrant le détail d'un patin de fixation.

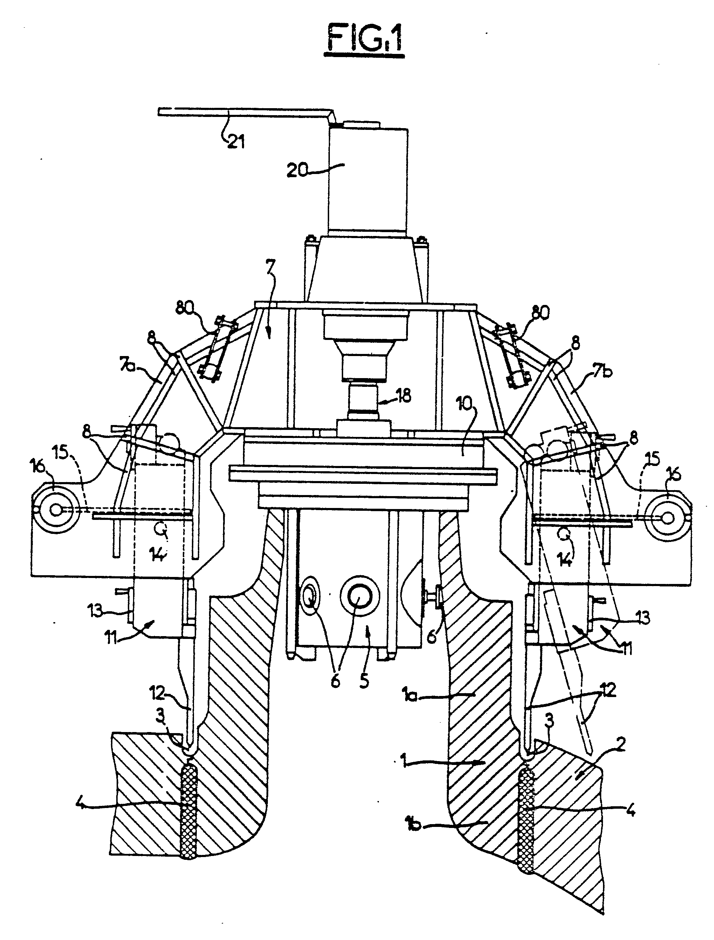

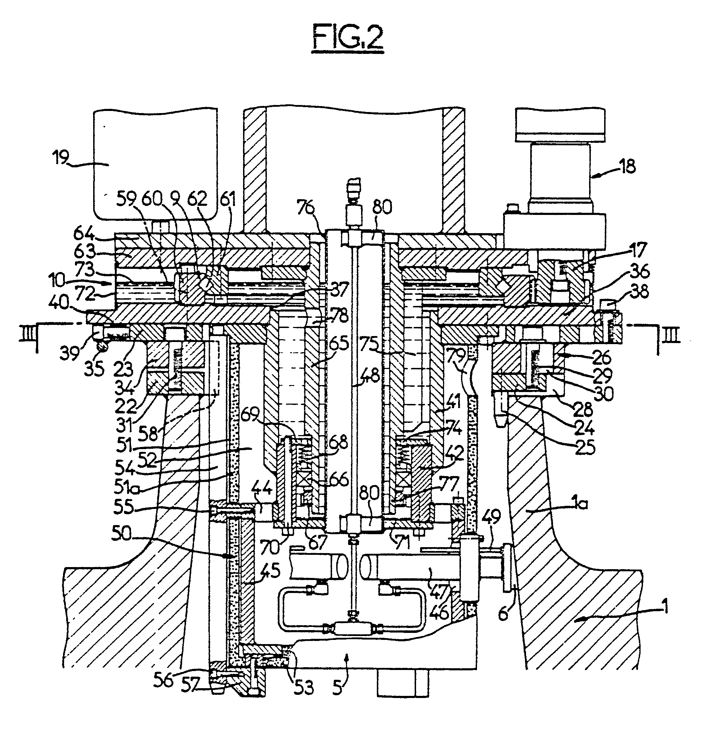

Telle qu'elle est représentée sur les figures, la machine selon l'invention est installée à l'intérieur d'un embout de tubulure 1 destiné à être soudé à la périphérie externe sensiblement cylindrique d'une cuve 2 de réacteur nucléaire. Pour l'opération d'usinage, l'embout de tubulure est disposé comme illustré sur les fig. 1 et 2 avec son axe vertical, l'axe de la cuve étant horizontal. La tubulure 1 comporte une partie 1a en forme de manchon dont la partie intérieure est sensiblement conique et un collet radial 1b muni sur sa périphérie externe d'un chanfrein définissant une saignée externe 3 avec un chanfrein analogue pratiqué sur la périphérie correspondante du bord de la cuve 2. Une saignée interne 4 est également définie du côté intérieur à la cuve entre deux chanfreins usinés respectivement sur le collet radial 1b et la périphérie de la cuve 2. Sur la fig. 1, la saignée intérieure 4 se trouve déjà remplie d'un cordon continu de soudure.

Avant de procéder à la soudure de la tubulure 1 sur la cuve 2, au moyen d'un cordon de soudure remplissant complètement la saignée externe 3, il convient d'usiner le fond de ladite saignée externe 3 jusqu'à éliminer les passes de soudure situées au fond de la saignée 4 et de reconstituer par cet usinage le chanfrein extérieur. Cette opération, intitulée reprise de l'envers, peut être réalisée d'une manière automatique au moyen de la machine selon l'invention.

Comme on peut le voir en particulier sur la fig. 1, la machine comprend un fût cylindrique désigné de façon générale par la référence 5 dont le diamètre est tel qu'il puisse pénétrer facilement à l'intérieur du manchon 1a de l'embout de tubulure 1. Le fût cylindrique 5 est muni d'un ensemble de six patins 6 servant au blocage et au maintien en position du fût cylindrique et susceptibles de venir coopérer avec la paroi interne légèrement conique du manchon 1a de l'embout de tubulure 1. Une poutre désignée de manière générale par la référence 7 comportant deux branches symétriques 7a et 7b diamétralement opposées et convenablement raidies par un ensemble de nervures 8 est montée en vue de sa rotation par rapport au pivot que constitue le fût cylindrique 5 par l'intermédiaire d'une couronne dentée 9 visible sur la fig. 2 et disposée à l'intérieur d'un carter 10 visible sur la fig. 1. Les deux branches symétriques diamétralement opposées 7a et 7b de la poutre 7 comportent chacune à leur extrémité dirigée vers le bas à l'extérieur de l'embout de tubulure 1, une tête d'usinage désignée de manière générale par la référence 11. Chaque tête d'usinage 11 comporte un coulisseau porte-outils 12 dont la position verticale peut être réglée par des moyens non représentés sur les figures comportant en particulier un servo-moteur de commande et un volant manuel de réglage 13.

L'inclinaison par rapport à la verticale du porte-outils 12 et de l'ensemble de la tête d'usinage 11 est obtenue par pivotement autour de l'axe horizontal d'articulation 14. Par ailleurs, l'ensemble de la tête d'usinage 11 peut être déplacé radialement au moyen de vis horizontales 15 entraînées en rotation par le volant 16.

On obtient donc de cette manière une possibilité de réglage du porte-outils 12 à la fois radialement, verticalement et en inclinaison de façon à permettre la réalisation de tous les usinages désirés et en particulier l'usinage de la saignée 3 et le chariotage de ses flancs.

L'entraînement en rotation de la poutre 7 portant les têtes d'usinage 11 se fait par un pignon d'attaque 17 visible sur la fig. 2 commandé par un réducteur 18 lui-même entraîné par l'intermédiaire d'une transmission à courroies non représentée sur les figures par un moteur électrique d'entraînement 19 visible sur la fig. 2. L'alimentation électrique du moteur 19 et des différents servo-moteurs de commande de position des porte-outils 12 se fait par un collecteur 20 sur le bâti duquel est fixé un bras anti-couple 21 recevant également les câbles de raccordement électrique.

On notera que la disposition diamétralement opposée et symétrique des deux têtes d'usinage 11 et des branches 7a et 7b de la poutre 7 permet d'obtenir un excellent équilibrage de l'ensemble de la machine lors du fonctionnement. Il en est de même que la disposition diamétralement opposée selon un axe perpendiculaire à l'axe général de la poutre 7 du réducteur 18 et du moteur d'entraînement 19 assurant la rotation de l'ensemble.

On va maintenant se référer aux fig. 2 et 5 pour décrire plus en détail les moyens permettant d'assurer le blocage et le maintien en position du fût cylindrique 5 à l'intérieur du manchon 1a de l'embout de tubulure 1.

En vue de la fixation de la machine, la face frontale externe de l'embout de tubulure 1 comporte trois taquets 22 rendus solidaires par soudage de ladite face frontale extérieure et dont un seul est visible sur la fig. 2.

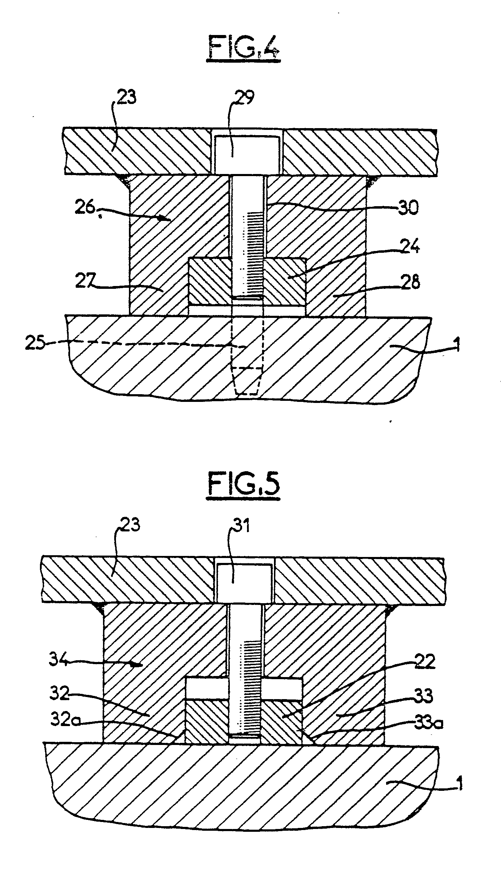

Une couronne intermédiaire d'accouplement 23 comporte trois patins de centrage réglables 24 munis chacun d'un doigt en saillie 25 susceptible de venir en contact avec la paroi interne sensiblement cylindrique du manchon 1a de l'embout de tubulure 1. Lors de son déplacement radial de réglage préalable, chaque patin de centrage 24 est guidé par ses faces latérales dans un couloir pratiqué dans une pièce de guidage 26 visible en particulier sur la fig. 4, solidaire de la face inférieure de la couronne intermédiaire 23. Chaque pièce de guidage 26 comporte deux branches latérales 27 et 28 qui délimitent le couloir de guidage du patin réglable 24 comme on peut le voir sur la fig. 4 et qui viennent prendre appui sur la face frontale externe de l'embout de tubulure 1. Après le réglage de la position radiale des trois doigts 25 des patins de centrage 24, réglage qui peut être facilité par l'existence de graduations et de repères convenablement disposés, le blocage des patins de centrage 24 se fait par les vis 29 solidaires desdits patins de centrage 24 et pouvant se déplacer dans les lumières oblongues 30 pratiquées dans les pièces de guidage 26. Le déplacement radial des différents doigts de centrage 25 permet donc d'adapter l'ensemble au diamètre particulier de la tubulure à usiner facilitant ainsi le montage de la couronne intermédiaire d'accouplement 23 sur la face frontale externe de la tubulure 1.

La fixation de la couronne intermédiaire 23 sur la tubulure 1 se fait par l'intermédiaire de trois vis 31 coopérant avec des trous taraudés pratiqués dans les taquets 22. Lors du montage, les taquets 22 viennent s'engager entre deux branches latérales 32 et 33 des patins de fixation 34 solidaires, par exemple par soudure, de la couronne 23 comme on peut le voir en particulier sur la fig. 5. Les vis 31 passant dans des trous pratiqués dans les patins de fixation 34 assurent la solidarisation de la couronne 23 avec la tubulure 1 par l'intermédiaire des trois taquets 22. On notera que la couronne 23 peut être mise en place grâce à l'existence de tiges de manutention 35.

Un plateau fixe 36 présentant un alésage central 37 est fixé par des vis 38 sur la face supérieure de la couronne intermédiaire d'accouplement 23. Pour faciliter le montage, quatre vis de réglage 39 coopérant avec une pièce formant écrou 40 solidaire du plateau 36, viennent appuyer sur une portion de la périphérie de la couronne 23. En agissant sur les vis 39, il est donc possible de régler la position de la tête d'usinage 11 par rapport à la saignée existante.

Dans l'alésage 37 du plateau fixe 36 est fixée par soudure une pièce cylindrique 41 formant la première partie extérieure du fût cylindrique 5 jouant le rôle de pivot pour la rotation de la tête d'usinage. La pièce cylindrique 41 comporte à sa partie intérieure par rapport à la cuve, une pièce de support de palier 42 sur laquelle est montée une plaque annulaire 43 munie d'orifices de passage 44.

A la périphérie de la plaque annulaire 43, du côté opposé à la partie extérieure 41 du fût cylindrique 5 se trouve fixée une deuxième pièce cylindrique 45 constituant la deuxième partie intérieure du fût cylindrique 5, de plus grand diamètre que la première partie 41.

Comme on peut le voir sur la fig. 2, l'assemblage ainsi réalisé des deux pièces cylindriques 41 et 45 de diamètre légèrement différent permet la réalisation d'un fût 5 sensiblement cylindrique pouvant pénétrer à l'intérieur d'une portion de l'extrémité de l'embout de tubulure 1 afin d'assurer le blocage et le maintien en position de la machine.

Dans ce but, la deuxième partie intérieure cylindrique 45 du fût cylindrique 5 précité comporte dans un seul plan diamétral par rapport au fût 5, six orifices périphériques 46 à l'intérieur desquels sont montés six vérins hydrauliques 47 alimentés en fluide hydraulique par une canalisation 48 disposée dans l'axe du fût cylindrique 5. Les tiges des vérins hydrauliques 47 comportent à leur extrémité faisant saillie à l'extérieur du fût cylindrique 5 et de la partie cylindrique 45, des patins de blocage 6 dont la surface peut être avantageusement munie d'une pièce convenablement inclinée pour entrer en contact avec la surface interne conique dans l'exemple illustré de l'embout de tubulure 1. Lors de ce déplacement vers l'extérieur, les tiges des vérins 47 sont guidées par une tige 49 de façon que la position angulaire de la face de contact inclinée des patins 6 soit maintenue.

Une enveloppe cylindrique de protection thermique 50 entoure complètement le fût cylindrique 5. L'enveloppe 50 comprend une couche 51a d'un matériau thermiquement isolant disposée à l'intérieur et une feuille mince 51 en acier inoxydable disposée à l'extérieur, convenablement polie, assurant le maintien mécanique de l'ensemble de protection thermique. Le diamètre de l'enveloppe cylindrique 50 est constant sur toute sa hauteur et elle vient pratiquement en contact avec la surface cylindrique extérieure de la partie intérieure 45 tandis qu'un espace annulaire relativement important référencé 52 sur la fig. 2 subsiste entre ladite enveloppe 50 et la partie extérieure 41 du fût cylindrique 5, compte tenu de son diamètre inférieur.

L'enveloppe de protection thermique 50 comporte des perforations permettant le passage des patins de blocage 6 commandés par les vérins 47.

L'isolation thermique se complète, du côté du fond du fût cylindrique, par une double plaque isolante 53.

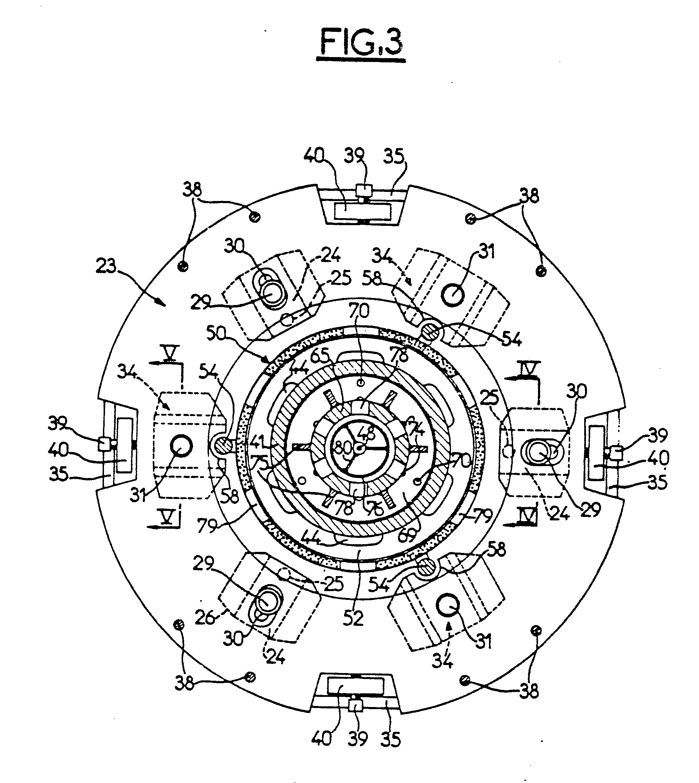

Trois tiges de guidage cylindriques 54 sont fixées à l'extérieur de l'enveloppe de protection 50 avec un écartement réciproque de 120° et s'étendent sur toute la hauteur de l'enveloppe 50. Leur fixation est assurée notamment au moyen des vis 55 qui coopèrent avec la plaque annulaire 43 et les vis 56 avec une pièce de fixation 57 dans la partie basse intérieure du fût cylindrique 5. Les trois tiges de guidage 54 viennent coopérer avec des évidements semi-circulaires 58 visibles en particulier sur la fig. 3 et pratiqués sur une partie des patins de fixation 34 en saillie à l'intérieur de l'alésage de l'embout de tubulure 1. De cette manière, lors de l'introduction du fût cylindrique 5 et de l'enveloppe de protection 50 qui l'entoure, l'ensemble se trouve correctement guidé par les tiges 54 et maintenu à un écartement convenable en évitant de rayer la surface interne de l'embout de tubulure 1.

Sur le plateau fixe 36 se trouve fixée par des vis 59, schématisées par leur axe la bague externe 60 à denture extérieure de la couronne dentée 9. La bague interne 61 peut donc tourner par rapport à la bague externe fixe 60 par l'intermédiaire des rouleaux 62. La bague interne 61 est fixée par des vis schématisées par leur axe à un plateau rotatif 63 muni d'un alésage central et qui porte le réducteur 18 du pignon d'entraînement 17 par l'intermédiaire d'une plaque d'assemblage 64.

Un manchon rotatif de forme générale cylindrique référencé 65 est monté dans l'alésage central du plateau rotatif 63 et fixé par soudure à ce plateau en s'étendant vers l'intérieur par rapport à la tubulure 1 à l'intérieur de la première partie 41 du fût cylindrique 5. Au voisinage de l'extrémité intérieure du manchon rotatif 65 se trouve monté un palier à roulement 66 qui comporte avantageusement des rouleaux coniques. Le palier 66, monté entre l'extrémité du manchon 65 et la pièce de support de palier 42, est maintenu en position à l'encontre d'un écrou de blocage 67 sous une action de précontrainte provoquée par une pluralité de ressorts hélicoïdaux 68 entrant en contact avec une plaque d'appui horizontale 69 fixée par des vis 70 sur la face supérieure de la pièce de support de palier 42.

Une paroi de fermeture 71 est en outre fixée à la face inférieure de la pièce de support de palier 42 sous la partie centrale de la plaque annulaire 43. Une tôle cylindrique 72 fixée sur un épaulement du plateau fixe 36 ferme l'espace entre ledit plateau fixe 36 et le plateau rotatif 63 définissant ainsi le carter 10 qui reçoit la couronne dentée 9 et le pignon 17.

Ce carter est rempli d'huile dont on aperçoit sur la fig. 2 le niveau 73 et cette huile remplit également l'espace délimité par la première partie 41 du fût cylindrique 5, la pièce de support de palier 42 et la paroi de fermeture 71 qui constitue le fond de cet espace. Pour permettre le passage de l'huile jusque dans le fond et en particulier dans la zone recevant le palier à roulement 66 on notera que la plaque d'appui 69 présente des perforations 74.

Pour provoquer un mouvement d'agitation et de refroidissement de l'huile contenue dans ce carter, le manchon rotatif 65 comprend six pales radiales 75 qui s'étendent dans l'espace situé entre ledit manchon rotatif 65 et la première partie 41 du fût cylindrique 5 sur toute la hauteur de cet espace en plongeant donc dans l'huile contenue dans le carter précité.

Une gaine centrale 76 de forme générale cylindrique et de même axe que l'ensemble des pièces cylindriques précédemment mentionnées est disposé à l'intérieur du manchon rotatif 65. Cette gâine est solidaire de la plaque de fond 71 qui est un élément fixe. Elle est disposée à un certain écartement de la paroi interne du manchon rotatif 65 dont la face frontale inférieure 77 est disposée à un certain écartement de la paroi de fermeture 71. L'huile se trouvant dans le carter de la couronne dentée 9 et de la partie supérieure du fût cylindrique 5 peut donc passer également à l'intérieur du manchon rotatif 65 dans l'espace annulaire subsistant entre ce dernier et la gaine centrale 76. Pour faciliter le passage de l'huile dans cet espace annulaire, des trous radiaux 78 sont pratiqués dans la paroi du manchon rotatif 65 entre les différentes pales d'agitation 75 sensiblement au niveau du plateau fixe 36.

Une circulation d'air de refroidissement provoquée par une soufflante non représentée sur la figure peut être créée jusqu'à l'intérieur de la gaine centrale 76 de façon à s'écouler verticalement du haut vers le bas à travers ladite gaine 76 jusque dans l'espace délimité par la partie intérieure 45 du fût cylindrique 5 et la paroi de fond 53. Cet air de refroidissement peut également ensuite remonter par les perforations 44 de la plaque annulaire 43 jusque dans l'espace 52 à l'intérieur de l'enveloppe de protection thermique 50 pour s'échapper par des passages d'évacuation 79 pratiqués dans l'enveloppe de protection thermique au voisinage de sa partie supérieure, c'est-à-dire sensiblement au niveau de la face frontale extérieure de l'embout de tubulure 1.

On notera que l'écoulement de l'air de refroidissement au contact de la paroi mince de la gaine centrale 76 favorise un transfert de chaleur par la paroi de cette gaine avec l'huile se trouvant à l'intérieur du manchon rotatif 65 et en contact avec la paroi extérieure de la gaine centrale 76. Le refroidissement de l'ensemble de la machine se trouve donc amélioré.

On notera en outre sur la fig. 2 la fixation de la canalisation 48 d'alimentation en huile de commande des vérins hydrauliques 47 qui se fait par deux ensembles de trois supports radiaux 80 au voisinage des extrémités inférieure et supérieure de la gaine centrale 76.

La mise en œuvre de la machine selon l'invention se fait de la manière suivante :

Après que les taquets 22 aient été soudés sur la face frontale externe de l'embout de tubulure 1, on procède au réglage de la position radiale des trois patins de centrage 24 en fonction du diamètre particulier de la tubulure qu'il convient d'usiner. Lorsque cette opération a été effectuée, les patins de centrage 24 ayant été bloqués par les vis 29, on procède à la manutention de la couronne intermédiaire d'accouplement en la supportant par des élingues fixées de manière provisoire aux tiges de manutention 35. Le montage de la couronne intermédiaire d'accouplement 23 est facilité par son centrage au moyen des trois doigts 25 des patins de centrage 24 dans l'alésage de l'embout de tubulure 1. Le positionnement angulaire de la couronne 23 se fait par introduction des taquets 22 dans les couloirs de guidage situés entre les branches latérales 32 et 33 des patins de fixation 34 solidaires de la couronne 23. Les chanfreins 33a et 32a visibles sur la fig. 5 facilitent le montage.

On procède ensuite à la fixation de la couronne 23 au moyen des vis 31.

Le reste de la machine comportant notamment les têtes d'usinage 11 et leurs moyens d'entraînement 18, 19, est soulevé par des élingues pouvant coopérer avec les crochets 80 visibles sur la fig. 1 jusqu'à venir au-dessus de l'embout de tubulure 1 dont l'axe est maintenu sensiblement vertical. On descend progressivement l'ensemble de la machine, les trois tiges de guidage 54 venant coopérer avec les évidements semi-circulaires 58 des trois patins de fixation 34 évitant ainsi tout risque de rayure de la surface intérieure de l'embout de tubulure 1.

Lorsque le fût cylindrique est introduit au maximum à l'intérieur de l'embout de tubulure 1 on règle la position du plateau fixe 36 au moyen des quatre vis de réglage 39 jusqu'à ce que les outils soient concentriques à la saignée existante.

La machine est alors prête à fonctionner, le réglage des porte-outils 12 en position et en orientation se faisant comme il a été dit précédemment.

Bien que la machine ait été ici illustrée dans un cas particulier d'usinage adapté à la fixation par soudure d'une tubulure sur une cuve de réacteur nucléaire, on comprendra que cette machine puisse être utilisée également pour l'exécution de chanfreins de profil cylindrique ou conique à l'extérieur de l'extrémité de tubes de grand diamètre quel que soit le profil interne de l'alésage de tels tubes.

**Revendications**

1. Machine d'usinage de saignées à la périphérie externe de la base d'un embout de tubulure ou d'un manchon (1) comprenant un fût cylindrique (41, 45) adapté pour pénétrer à l'intérieur de l'embout de la tubulure (1), muni de patins de blocage et de maintien en position (6) coopérant avec la paroi interne de l'embout de tubulure et une tête d'usinage munie d'un porte-outils réglable radialement, verticalement et en inclinaison, et entraînée en rotation par l'intermédiaire d'une couronne dentée (9) comportant des éléments de roulement et coopérant avec un pignon satellite (17), caractérisée par le fait que le blocage et le maintien en position du fût cylindrique (41, 45) par rapport à l'embout de tubulure (1) sont réalisés au moyen :

a) d'une couronne intermédiaire d'accouplement (23) pouvant être fixée à l'extrémité extérieur dudit fût cylindrique et munie de moyens de fixation sur la face frontale externe de l'embout de tubulure (1) ; et

b) d'un ensemble de patins de blocage (6) solidaires de vérins hydrauliques (47) montés dans un même plan radial au voisinage de l'extrémité intérieure dudit fût cylindrique.

2. Machine d'usinage selon la revendication 1, caractérisée par le fait que les moyens de fixation de la couronne intermédiaire d'accouplement (23) sur la face frontale externe de l'embout de tubulure comprennent trois patins de fixation (34) pouvant être fixés sur trois taquets (22) solidaires de la face frontale externe de l'embout de tubulure.

3. Machine d'usinage selon la revendication 2, caractérisée par le fait que les patins de fixation (34) comprennent des branches latérales (32, 33) définissant un canal de guidage pour un taquet (22) solidaire de la face frontale externe de l'embout de tubulure.

4. Machine d'usinage selon l'une quelconque des revendications précédentes, caractérisée par le fait que la couronne intermédiaire d'accouplement (23) comporte trois patins de centrage réglables (24) venant coopérer par des doigts en saillie (25) avec la paroi interne de l'embout de tubulure (1) lors du montage de la couronne (23) sur la face externe de l'embout de tubulure.

5. Machine d'usinage selon l'une quelconque des revendications précédentes, caractérisée par le fait que trois tiges de guidage (54) sont fixées à l'extérieur du fût cylindrique (41, 45) sur toute sa hauteur et viennent coopérer avec des évidements (58) solidaires de l'alésage de la couronne intermédiaire d'accouplement (23) lors de l'introduction du fût cylindrique à l'intérieur de l'embout de tubulure.

6. Machine d'usinage selon la revendication 5, caractérisée par le fait que les évidements (58) sont pratiqués sur les trois patins de fixation (34).

7. Machine d'usinage selon l'une quelconque des revendications précédentes, caractérisée par le fait que la tête d'usinage est montée sur un plateau (63) entraîné en rotation par l'intermédiaire de la couronne dentée (9) et solidaire d'un manchon rotatif (65) pénétrant en partie à l'intérieur du fût cylindrique (41, 45) et supporté par rapport à celui-ci par un palier à roulement (66) monté au voisinage de l'extrémité intérieure dudit manchon (65).

8. Machine d'usinage selon la revendication 7, caractérisée par le fait qu'une paroi de fermeture (71) définit dans une partie (41) du fût cylindrique, un carter étanche pouvant être rempli de lubrifiant soumis à un mouvement d'agitation par un ensemble de pales radiales (75) solidaires du manchon (65) précité.

9. Machine d'usinage selon l'une quelconque des revendications précédentes, caractérisée par le fait qu'une enveloppe cylindrique de protection thermique (50) entoure le fût cylindrique (41, 45), les tiges de guidage (54) étant disposées à l'extérieur de ladite enveloppe laquelle comporte une plaque de fond (53), l'ensemble définissant un espace interne sensiblement étanche.

10. Machine d'usinage selon la revendication 9, caractérisée par le fait qu'une gaine centrale (76) est disposée à l'intérieur du manchon rotatif (65) et débouche à l'extérieur de la paroi de fermeture (71) de façon à permettre l'établissement d'une circulation d'air de refroidissement alimentée par ladite gaine centrale jusque dans l'espace intérieur à l'enveloppe de protection thermique.

11. Machine d'usinage selon les revendications 9 ou 10, caractérisée par le fait que le carter étanche rempli de lubrifiant renfermant le manchon rotatif (65) est délimité au centre par la paroi externe de la gaine centrale (76) améliorant ainsi l'échange thermique.

12. Machine d'usinage selon la revendication 11, caractérisée par le fait que le manchon rotatif comporte des trous (78) pour le passage du lubrifiant.

13. Machine selon l'une quelconque des revendications précédentes, caractérisée par le fait que le fût cylindrique comprend une première partie extérieure (41) délimitée par la paroi de fermeture (71) et une deuxième partie intérieure (45) de plus grand diamètre reliée à la première partie par une plaque annulaire (43) munie d'orifices de passage (44) pour l'air de refroidissement.

14. Machine d'usinage selon l'une quelconque des revendications précédentes, caractérisée par le fait que le mouvement radial des patins de blocage (6) est guidé par une tige (49) assurant le maintien de la position angulaire des patins de blocage (6).

15. Machine d'usinage selon l'une quelconque des revendications précédentes, caractérisée par le fait qu'elle comprend deux bras porte-outils diamétralement opposés montés sur un bâti rotatif.

16. Procédé de blocage et de maintien en position d'une machine d'usinage de saignées à la périphérie externe de la base d'un embout de tubulure ou d'un manchon (1) sur ledit embout de tubulure, caractérisé par le fait que l'on fixe tout d'abord une couronne intermédiaire d'accouplement (23) sur la face frontale externe de l'embout de tubulure (1), puis que l'on introduit la machine d'usinage comprenant un fût cylindrique (41, 45) à l'intérieur d'une portion de l'embout de tubulure et que l'on procède au blocage et au maintien en position du fût cylindrique précité au moyen :

a) de la fixation de la partie extérieure du fût cylindrique sur la couronne intermédiaire d'accouplement ;

b) d'un ensemble de patins de blocage (6) solidaire de vérins hydrauliques (47) montés dans un même plan radial au voisinage de l'extrémité intérieure du fût cylindrique.

**Claims**

1. Machine for making grooves on the outer periphery of the base of a tube endpiece or of a sleeve (1), comprising a cylindrical shank (41, 45) adapted for penetrating inside the tube endpiece (1) and provided with blocks (6) for locking and maintaining in position (6), cooperating with the inner wall of the tube endpiece, and a machining head provided with a toolholder radially and

vertically adjustable and of adjustable inclination and driven in rotation by means of a gear ring (9) including rolling elements and cooperating with a planet wheel (17), characterised in that the cylindrical shank (41, 45) is locked and maintained in position relative to the tube endpiece (1) by means of :

a) an intermediate coupling ring (23) which can be fastened to the outer end of the said cylindrical shank and is provided with means of fastening to the outer front face of the tube endpiece (1), and

b) a plurality of locking blocks (6) secured to hydraulic jacks (47) mounted in the same radial plane in the vicinity of the inner end of the said cylindrical shank.

2. Machine according to Claim 1, characterised in that the means of fastening the intermediate coupling ring (23) to the outer front face of the tube endpiece comprise three fastening blocks (34) which can be fastened to three catches (22) secured to the outer front face of the tube endpiece.

3. Machine according to Claim 2, characterised in that the fastening blocks (34) comprise lateral branches (32, 33) which define a guide channel for a catch (22) secured to the outer front face of the tube endpiece.

4. Machine according to anyone of the preceding claims, characterised in that the intermediate coupling ring (23) includes three adjustable centering blocks (24) which cooperate by means of projecting fingers (25) with the inner wall of the tube endpiece (1) when the ring (23) is mounted on the outer face of the tube endpiece.

5. Machine according to anyone of the preceding claims, characterised in that three guide rods (54) are fastened to the outside of the cylindrical shank (41, 45) over its entire height and cooperate with recesses (58) integral with the bore of the intermediate coupling ring (23) when the cylindrical shank is introduced inside the tube endpiece.

6. Machine according to Claim 5, characterised in that the recesses (58) are made in the three fastening blocks (34).

7. Machine according to anyone of the preceding claims, characterised in that the machining head is mounted on a plate (63) driven in rotation by means of the gear ring (9) and secured to a rotary sleeve (65) which partially penetrates inside the cylindrical shank (41, 45) and which is supported relative to the latter by a rolling bearing (66) mounted in the vicinity of the inner end of said sleeve (65).

8. Machine according to Claim 7, characterised in that a closing wall (71) defines, in a part (41) of the cylindrical shank, a leakproof housing which can be filled with lubricant subjected to an agitating movement by an assembly of radial blades (75) integral with the said sleeve (65).

9. Machine according to anyone of the preceding claims, characterised in that a cylindrical heatprotection casing (50) surrounds the cylindrical shank (41, 45), the guide rods (54) being arranged on the outside of said casing, which includes a bottom plate (53), the assembly as a wholce defining a substantially leakproof inner space.

10. Machine according to Claim 9, characterised in that a central conduit (76) is arranged inside the rotary sleeve (65) and opens onto the outside of the closing wall (71), to allow cooling air supplied via the said central conduit to circulate into the space within the heat-protection casing.

11. Machine according to Claims 9 or 10, characterised in that the leakproof housing filled with lubricant and containing the rotary sleeve (65) is bound at the centre by the outer wall of the central conduit (76), thus improving the heat exchange.

12. Machine according to Claim 1, characterised in that the rotary sleeve includes holes (78) for the passage of the lubricant.

13. Machine according to anyone of the preceding claims, characterised in that the cylindrical shank comprises a first outer part (41) bound by the closing wall (71), and a second inner part (45) of larger diameter connected to the first part by means of an annular plate (43) provided with passage orifices (44) for the cooling air.

14. Machine according to anyone of the preceding claims, characterised in that the radial movement of the locking blocks (6) is guided by a rod (49) which ensures that the angular position of the locking blocks (6) is maintained.

15. Machine according to anyone of the preceding claims, characterised in that it comprises two diametrically opposite toolholder arms mounted on a rotary frame.

16. Method for locking and maintaining in position a machine for making grooves on the outer periphery of the base of a tube endpiece or of a sleeve (1) on the said tube endpiece, characterised in that an intermediate coupling ring (23) is first fastened to the outer front face of the tube endpiece (1), in that the machine comprising a cylindrical shank (41, 45) is then introduced inside a portion of the tube endpiece, and in that the said cylindrical shank is locked and maintained in position by means of :

a) the fastening of the outer part of the cylindrical shank to the intermediate coupling ring,

b) a plurality of locking blocks (6) secured to hydraulic jacks (47) mounted in the same radial plane in the vicinity of the inner end of the cylindrical shank.

**Patentansprüche**

1. Maschine zum Spanen einer Nut um den Außenumfang am Fuß eines Rohrstutzes bzw. einer Buchse (1), mit einem zylindrischen Schaft (41, 42), der so eingerichtet ist, daß er ins Innere des Rohrstutzens (1) eingeführt werden kann und mit Feststellblöcken (6) zum Einspannen des Zylinderschafts (41-42) in seiner Lage versehen ist, die mit der Innenwand des Rohrstutzens (1) zusammenwirken, und mit einem Spankopf, der mit einem radial, vertikal und schräg verstellbaren Werkzeughalter ausgerüstet ist und über einen Zahnkranz (9) rotierend angetriebend wird, der mit Rollagerelementen versehen ist und mit einem Planetenrad (17) zusammenwirkt, dadurch gekennzeichnet, daß das Feststellen und Einspannen des Zylinderschafts (41, 45) in seiner Lage gegenüber dem Rohrstutzen (1) bewirkt wird durch :

a) einen Zwischenkupplungsring (23), der außen am Ende des genannten Zylinderschafts (41, 45) befestigt werden kann und mit Mitteln zur Befestigung außen auf der Stirnseite des Rohrstutzens (1) versehen ist,

b) einer Gruppe von Einspannblöcken (6), die mit hydraulischen Stellzylindern (47) verbunden ist, die in der gleichen Radialebene nahe dem Ende des genannten Zylinderschafts innen angeordnet ist.

2. Maschine zum Spanen gemäß Anspruch 1, dadurch gekennzeichnet, daß die Mittel zum Befestigen des Zwischenkupplungsrings (23) außen auf der Stirnfläche des Rohrstutzens drei Feststellblöcke (34) umfassen, die an drei außen an der Stirnseite des Rohrstutzens fest verbundenen Anschlägen (22) befestigt werden können.

3. Maschine zum Spanen gemäß Anspruch 2, dadurch gekennzeichnet, daß die Feststellblöcke (34) Seitenteile (32, 33) haben, die einen Führungskanal für einen außen an der Stirnfläche des Rohrstutzens fest verbundenen Anschlag (22) definieren.

4. Maschine zum Spanen gemäß einem beliebigen der vorstehenden Ansprüche, dadurch gekennzeichnet, daß der Zwischenkupplungsring (23) drei einstellbare Zentrierblöcke (24) hat, die über vorragende Finger (25) beim Aufsetzen des Rings (23) außen auf den Rohrstutzen mit der Innenwand des Rohrstutzens (1) zusammenwirken.

5. Maschine zum Spanen gemäß einem beliebigen der vorstehenden Ansprüche, dadurch gekennzeichnet, daß an der Außenseite des Zylinderschafts (41, 45) über seine gesamte Höhe drei Führungstangen (54) befestigt sind und beim Einführen des Zylinderschafts in den Rohrstutzen mit Aussparungen (58) der Bohrung des Zwischenkupplungsrings (23) zusammenwirken.

6. Maschine zum Spanen gemäß Anspruch 5, dadurch gekennzeichnet, daß diese Aussparungen (58) in die drei Befestigungsblöcke (34) eingearbeitet sind.

7. Maschine zum Spanen gemäß einem beliebigen der vorstehenden Ansprüche, dadurch gekennzeichnet, daß der Spankopf auf einer Arbeitsplatte (63) montiert ist, die über den Zahnkranz (9) in Drehung versetzt wird und mit einer Drehhlüse (65) fest verbunden ist, die teilweise in das Innere des Zylinderschafts (41, 45) vorsteht und diesem gegenüber durch ein Rolllager (66) gehalten wird, das innen am Ende der genannten Hülse (65) montiert ist.

8. Maschine zum Spanen gemäß Anspruch 7, dadurch gekennzeichnet, daß eine Verschlußwand (71) in einem Teil (41) des Zylinderschafts ein dichtes Gehäuse definiert, das mit einem über eine Radialschaufelgruppe (75) die mit der vorgenannten Hülse (65) fest verbunden ist, umgerührten Schmiermittel gefüllt werden kann.

9. Maschine zum Spanen gemäß einem beliebigen der vorstehenden Ansprüche, dadurch gekennzeichnet, daß ein Zylindrischer Wärmeschutzmantel (50) den Zylinderschaft (41, 45) umgibt, wobei die Führungsstangen (54) außerhalb des genannten Mantels angeordnet sind, der eine Grundplatte (53) enthält, wobei die gesamte Baugruppe einen im wesentlichen dichten Innenraum definiert.

10. Maschine zum Spanen gemäß Anspruch 9, dadurch gekennzeichnet, daß im Inneren der Drehhülse (65) eine Röhre (76) mittig angeordnet ist und außerhalb der Verschlußwand (71) mündet, so daß eine Kühlluftumwälzung gewährleistet ist, die von der genannten mittigen Röhre (76) bis in den Innenraum des Wärmeschutzmantels unterhalten wird.

11. Maschine zum Spanen gemäß Anspruch 9 oder 10, dadurch gekennzeichnet, daß das mit Schmiermittel gefüllte dichte Gehäuse, das die Drehhülse (65) einschließt, nach dem Mittelpunkt zu durch die Außenwand der mittigen Röhre (76) begrenzt wird und somit den Wärmeaustausch verbessert.

12. Maschine zum Spanen gemäß Anspruch 11, dadurch gekennzeichnet, daß die Drehhülse Löcher (78) zum Durchtritt des Schmiermittels enthält.

13. Maschine zum Spanen gemäß einem beliebigen der vorstehenden Ansprüche, dadurch gekennzeichnet, daß der Zylinderschaft einen ersten, durch eine Schließwand (71) abgegrenzten äußeren Teil (41) und einen zweiten, inneren Teil (45) mit größerem Durchmesser, der mit dem ersten Teil über eine Ringsplatte (43) mit Durchgangsöffnungen (44) für die Kühlluft verbunden ist, umfaßt.

14. Maschine zum Spanen gemäß einem beliebigen der vorstehenden Ansprüche, dadurch gekennzeichnet, daß die Radialbewegung der Feststellblöcke (6) durch eine Stange (49) geführt wird, die die Winkellage der Feststellblöcke (6) gewährleistet.

15. Maschine zum Spanen gemäß einem beliebigen der vorstehenden Ansprüche, dadurch gekennzeichnet, daß sie zwei einander gegenüberliegende, an einem Drehrahmen angeordnet Werkzeughalterarme enthält.

16. Verfahren zum Feststellen und Einspannen einer Maschine zum Spanen einer Nut um den Außenumfang am Fuß eines Rohrstutzens bzw. einer Buchse (1) auf dem genannten Rohrstutzen, dadurch gekennzeichnet, daß man zuerst einen Zwischenkupplungsring (23) außen auf die Stirnwand des Rohrstutzens aufsetzt, daß man dann die Maschine zum Spanen, enthaltend einen Zylinderschaft (41, 45) teilweise in den Rohrstutzen einführt und dann zum Feststellen und Einspannen des Zylinderschafts in seiner Lage übergeht mittels :

a) Befestigung des Außenteils des Zylinderschafts auf dem Zwischenkupplungsring ;
b) einer Gruppe Feststellblöcke (6), die mit hydraulischen Stellzylindern (47) fest verbunden sind, die in der gleichen Radialebene innen am Ende des Zylinderschafts montiert sind.

# FIG.1

# FIG.2

# FIG.3

## FIG.4

## FIG.5